# EUROPÄISCHE PATENTANMELDUNG

(11) **EP 4 782 729 A1**
(43) Veröffentlichungstag der Anmeldung: **29.07.2026**
(21) Anmeldenummer: 25153590.2
(22) Anmeldetag: 23.01.2025
(51) Int. Cl.: F16K 1/52, F16K 31/385, F16K 31/524, F16K 31/56

(54) **ABSPERRORGAN MIT EINEM VARIABLEN ANSCHLAG**

(71) Anmelder: Neoperl GmbH, 79379 Müllheim (DE)
(72) Erfinder: Tempel, Marc, 79111 Freiburg (DE)
(74) Vertreter: Mertzlufft-Paufler, Cornelius

(57) **Zusammenfassung**

Die Erfindung betrifft ein Absperrorgan (1), insbesondere Ventil, für ein fließfähiges Medium mit mindestens einem in eine geöffnete Stellung und in eine geschlossene Stellung bringbaren Verschlusselement (3), wobei in der geöffneten Stellung eine Durchflussmenge des fließfähigen Mediums durch das Absperrorgan einstellbar ist. Der Erfindung liegt die Aufgabe zugrunde, ein Absperrorgan bereitzustellen, welches auf einfache Weise eine Selektion von in dem geöffneten Zustand des Absperrorgans einstellbaren Durchflussmengen ermöglicht. Diese Aufgabe wird dadurch gelöst, dass das Absperrorgan (1) einen variablen Anschlag (36), insbesondere einen variabel anordbaren Anschlag (36), und einen damit zusammenwirkenden Gegenanschlag (37) aufweist, mittels welchen beiden die in der geöffneten Stellung einstellbare Durchflussmenge auf eine variable Untermenge begrenzbar ist.

## Beschreibung

Die Erfindung betrifft ein Absperrorgan für ein fließfähiges Medium mit mindestens einem in eine geöffnete Stellung und in eine geschlossene Stellung bringbaren Verschlusselement, wobei in der geöffneten Stellung eine Durchflussmenge des fließfähigen Mediums durch das Absperrorgan einstellbar ist. Das Absperrorgan kann insbesondere ein Ventil sein.

Absperrorgane sind grundsätzlich aus der Praxis bekannt, beispielsweise in Gestalt von Ventilen, Schiebern, Klappen oder Hähnen. Absperrorgane weisen dabei regelmäßig einen Zulauf, einen Ablauf, ein Verschlusselement und einen Sitz für das Verschlusselement auf.

Ein Absperrorgan dient dazu, eine Strömung eines fließfähigen Mediums, insbesondere eine Strömung eines Fluids von dem Zulauf zu dem Ablauf, durch eine an dem Sitz des Absperrorgans angrenzende Öffnung freizugeben, zu stoppen und/oder zu drosseln. Zu diesem Zweck kann ein Absperrorgan in unterschiedliche Zustände gebracht werden.

In einem geschlossenen Zustand eines Absperrorgans, insbesondere eines Ventils, in welchem kein Durchfluss eines fließfähigen Mediums durch die an dem Sitz des Absperrorgans angrenzende Öffnung möglich ist, ist das Verschlusselement in der geschlossenen Stellung angeordnet. In der geschlossenen Stellung ist das Verschlusselement derart dichtend an dem Sitz angeordnet, dass ein fließfähiges Medium nicht oder im Wesentlichen nicht durch die an dem Sitz des Absperrorgans angrenzende Öffnung hindurchströmen kann.

In einem geöffneten Zustand eines Absperrorgans, insbesondere eines Ventils, in welchem ein Durchfluss eines fließfähigen Mediums durch die an dem Sitz des Absperrorgans angrenzende Öffnung möglich ist, ist das Verschlusselement in der geöffneten Stellung angeordnet. In der geöffneten Stellung kann das Verschlusselement beispielsweise beabstandet zu dem Sitz angeordnet sein, so dass ein fließfähiges Medium durch die an dem Sitz des Absperrorgans angrenzende Öffnung hindurchströmen kann.

Es sind auch Absperrorgane bekannt, mit welchen im geöffneten Zustand die Durchflussmenge des fließfähigen Mediums durch das Absperrorgan einstellbar ist. Beispielsweise kann bei Schiebern das als Schieber ausgebildete Verschlusselement in Bezug auf den Sitz unterschiedlich stark verschoben sein. Bei beispielsweise Klappen kann das als Klappe ausgebildete Verschlusselement in unterschiedlich großen Winkeln in Bezug auf den Sitz angestellt sein. Bei Ventilen kann das Verschlusselement unterschiedlich weit von dem Sitz entfernt angeordnet sein.

Es hat sich gezeigt, dass es für eine Benutzungsperson von Absperrorganen wünschenswert sein kann, vorbestimmte Durchflussmengen und/oder Bereiche von Durchflussmengen einfacher einstellen zu können.

Der Erfindung liegt die Aufgabe zugrunde, ein Absperrorgan bereitzustellen, welches auf einfache Weise eine Selektion von in dem geöffneten Zustand des Absperrorgans einstellbaren Durchflussmengen ermöglicht.

Diese Aufgabe wird durch die Gegenstände mit den Merkmalen der unabhängigen Ansprüche gelöst. Vorteilhafte Ausgestaltungen gehen aus den abhängigen Ansprüchen hervor.

Die in den abhängigen Patentansprüchen einzeln aufgeführten Merkmale können in beliebiger technologisch sinnvollerweise miteinander kombiniert werden und weitere Ausgestaltungen der Erfindung definieren, solange diese Kombinationen die Merkmale wenigstens eines unabhängigen Anspruchs aufweisen. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Zur Lösung der gestellten Aufgabe schlägt die Erfindung vor, dass bei einem Absperrorgan gemäß der eingangs genannten Art das Absperrorgan einen variablen Anschlag und einen damit zusammenwirkenden Gegenanschlag aufweist, mittels welchen beiden die in der geöffneten Stellung einstellbare Durchflussmenge auf eine variable Untermenge begrenzbar ist.

Der variable Anschlag kann insbesondere dadurch variabel sein, dass der variable Anschlag variabel anordbar ist.

Mit anderen Worten ausgedrückt, kann bei einem Absperrorgan gemäß der eingangs genannten Art der hier beschriebene variable Anschlag so angeordnet werden, dass in der geöffneten Stellung des Verschlusselements nicht mehr sämtliche mit dem Absperrorgan grundsätzlich einstellbaren Durchflussmengen eingestellt werden können. Dadurch können Einstellungen des Absperrorgans, die eine Benutzungsperson des Absperrorgans regelmäßig nicht verwendet, und/oder Einstellungen einer das Absperrorgan aufweisenden Sanitäreinheit, die eine Benutzungsperson des Absperrorgans regelmäßig nicht verwendet, von der Benutzung ausgeschlossen werden. Somit kann die Verwendung des Absperrorgans und/oder der Sanitäreinheit für die Benutzungsperson intuitiver und/oder einfacher werden. Insbesondere kann der variable Anschlag in unterschiedlichen Positionen und/oder Orientierungen anordbar sein.

Das Zusammenwirken des variablen Anschlags und des Gegenanschlags miteinander kann insbesondere ein mechanisches Zusammenwirken, weiter insbesondere in Form eines physischen Kontaktes zwischen dem variablen Anschlag und dem Gegenanschlag, sein.

Der variable Anschlag und der Gegenanschlag können insbesondere derart ausgebildet sein, dass sie in einer quer und bevorzugt orthogonal zu einer Bewegungsrichtung des Verschlusselements orientierten Richtung miteinander zusammenwirken. Zusätzlich oder alternativ können der variable Anschlag und der Gegenanschlag in einer um die Bewegungsrichtung des Verschlusselements orientierte Drehrichtung miteinander zusammenwirken.

In der Praxis kann zusätzlich oder alternativ vorgesehen sein, dass das Verschlusselement in der geöffneten Stellung in einer Mehrzahl von Öffnungspositionen anordbar ist, wobei jede Öffnungsposition eine vorbestimmte Durchflussmenge des fließfähigen Mediums durch das Absperrorgan definiert, wobei mit dem variablen Anschlag und dem Gegenanschlag die Mehrzahl von Öffnungspositionen auf eine variable Untermenge dieser Mehrzahl begrenzbar ist.

Mit anderen Worten ausgedrückt, kann der variable Anschlag so angeordnet werden, dass das Verschlusselement in der geöffneten Stellung nicht mehr in sämtlichen Öffnungspositionen der Mehrzahl von Öffnungspositionen positioniert werden kann. Dadurch können die vorgenannten Einstellungen des Absperrorgans und/oder der Sanitäreinheit, die eine Benutzungsperson regelmäßig nicht verwendet, auf eine für die Benutzungsperson besonders intuitiv bedienbare und/oder technisch robuste Weise ausgeschlossen werden. Aufgrund dieser Ausbildung des Absperrorgans kann ein Schalten des Verschlusselements zwischen der geöffneten Stellung und der geschlossenen Stellung sowie eine Einstellung der Durchflussmenge durch das Absperrorgan in der geöffneten Stellung ausschließlich mit dem Verschlusselement erfolgen. Dieses Absperrorgan ist somit besonders einfach und robust. Gleichzeitig kann mit dem variablen Anschlag und dem Gegenanschlag auf einfache Weise der beschriebene, erzielbare Nutzen erreicht werden.

In der Praxis kann zusätzlich oder alternativ vorgesehen sein, dass der variable Anschlag in Bezug auf eine maximale Öffnungsposition, die eine maximale Durchflussmenge des fließfähigen Mediums durch das Absperrorgan definiert, variabel anordbar ist. Zusätzlich oder alternativ kann vorgesehen sein, dass der variable Anschlag in Bezug auf eine minimale Öffnungsposition, die eine minimale Durchflussmenge des fließfähigen Mediums durch das Absperrorgan definiert, variabel anordbar ist.

Insbesondere kann es aufgrund einer variablen Anordnung des variablen Anschlags in Bezug auf die minimale Öffnungsposition und/oder die maximale Öffnungsposition möglich sein, eine Anordnung des Verschlusselements in einer Menge von Öffnungspositionen auszuschließen, die die minimale Öffnungsposition umfasst. Ebenso kann es aufgrund einer variablen Anordnung des variablen Anschlags in Bezug auf die minimale Öffnungsposition und/oder die maximale Öffnungsposition möglich sein, eine Anordnung des Verschlusselements in einer Menge von Öffnungspositionen auszuschließen, die die maximale Öffnungsposition umfasst. Mit anderen Worten ausgedrückt, kann es möglich sein, die Extrema, d.h. den größtmöglichen Durchfluss und/oder den geringstmöglichen Durchfluss von der Einstellung durch eine Benutzungsperson auszuschließen.

Besonders vorteilhaft kann es in diesem Zusammenhang sein, wenn die Mehrzahl von Öffnungspositionen, in denen das Verschlusselement anordbar ist, auf eine Untermenge dieser Mehrzahl begrenzt ist und die Untermenge eine Mehrzahl von stufenlos zueinander übergehenden Öffnungspositionen umfasst.

Wenn der geringstmögliche Durchfluss ausgeschlossen ist, kann die Benutzungsperson beispielsweise ein Stellglied des Absperrorgans so lange, insbesondere stufenlos, verstellen, bis der variable Anschlag den Gegenanschlag kontaktiert und somit eine - aufgrund der zuvor gewählten Anordnung des variablen Anschlags - mit dieser vorbestimmen Anordnung erzielbare minimale Durchflussmenge einstellen. Dadurch ist das Einstellen eines möglichst geringen Durchflusses durch das Absperrorgan besonders genau und einfach möglich.

Wenn der größtmögliche Durchfluss ausgeschlossen ist, kann die Benutzungsperson beispielsweise ein Stellglied des Absperrorgans so lange, insbesondere stufenlos, verstellen, bis der variable Anschlag den Gegenanschlag kontaktiert und somit eine - aufgrund der zuvor gewählten Anordnung des variablen Anschlags - mit dieser vorbestimmen Anordnung erzielbare maximale Durchflussmenge erzielen. Dadurch ist es möglich, besonders große Durchflüsse durch das Absperrorgan sicher zu verhindern. Insbesondere wenn das Absperrorgan beispielsweise in einer Sanitäreinheit eingerichtet ist, kann somit auf einfach Weise Wasser gespart werden.

In der Praxis kann zusätzlich oder alternativ vorgesehen sein, dass das Verschlusselement in der geöffneten Stellung in einer Anschlagposition anordbar ist, die mit einer Anordnung des variablen Anschlags gekoppelt ist.

Die Anschlagposition ist eine Öffnungsposition der Mehrzahl von Öffnungspositionen. Die Anschlagposition kann insbesondere eine Position an einem Ende einer Reihe von Öffnungspositionen der hier beschriebenen Untermenge der Mehrzahl von Öffnungspositionen des Verschlusselements sein. Die Anordnung des Verschlusselements in der Anschlagposition kann insbesondere eindeutig und/oder mechanisch mit einer Anordnung des variablen Anschlags gekoppelt sein. Eine eindeutige Kopplung bedeutet, dass der variable Anschlag in einer Mehrzahl von Positionen und/oder Orientierungen anordbar ist, insbesondere in Bezug auf die minimale Öffnungsposition und/oder die maximale Öffnungsposition, wobei jede Position und/oder jede Orientierung des variablen Anschlags eindeutig, d.h. auf eine einzige Weise, mit einer Öffnungsposition des Verschlusselements gekoppelt ist, wenn der variable Anschlag mit dem Gegenanschlag zusammenwirkt, insbesondere in Kontakt ist.

In der Praxis kann zusätzlich oder alternativ vorgesehen sein, dass das mindestens eine Verschlusselement ein insbesondere mit einer bistabilen Stellmechanik diskret zwischen der geöffneten Stellung und der geschlossenen Stellung schaltbares Verschlusselement ist.

Das Verschlusselement oder ein Bestandteil des Verschlusselements kann, insbesondere mit der bistabilen Stellmechanik, diskret in zwei unterschiedliche Abstände zu dem Sitz des Verschlusselements bringbar sein. Mit einem diskret schaltbaren Verschlusselement ist ein Verschlusselement gemeint, das abrupt schaltbar ist und/oder das ohne eine Einnahme einer stabilen Zwischenstellung zwischen der geöffneten Stellung und der geschlossenen Stellung schaltbar ist.

Dies erlaubt ein einfaches Betätigen und einen einfachen Wechsel zwischen den Positionen, da ein Benutzer nur Drücken muss, um den Wechsel zu erreichen. Zum Schalten des Verschlusselements mit der bistabilen Stellmechanik kann das Absperrorgan und/oder die Stellmechanik insbesondere ein Betätigungsmittel aufweisen, das insbesondere als Handbedienelement ausgebildet ist und das von einer Benutzungsperson bedienbar ist.

In der Praxis kann zusätzlich oder alternativ vorgesehen sein, dass das Absperrorgan eine Verstelleinrichtung aufweist, mit welcher das mindestens eine Verschlusselement in der Mehrzahl von Öffnungspositionen anordbar ist.

Mit anderen Worten ausgedrückt kann das Absperrorgan die Verstelleinrichtung aufweisen, welche dazu dient, das Verschlusselement in einen variabel einstellbaren, stabilen Abstand zu dem Sitz zu bewegen.

Mittels der Verstelleinrichtung kann durch die Einstellung des Abstandes des Verschlusselements oder eines Bestandteils des Verschlusselements zu dem Sitz des Verschlusselements eine Durchflussrate des fließfähigen Mediums durch die an dem Sitz angrenzende Öffnung eingestellt werden. Insbesondere kann das Verschlusselement stufenlos zwischen verschiedenen Öffnungspositionen der Mehrzahl von Öffnungspositionen verstellbar sein.

Das Bewegen des Verschlusselement in einen variabel einstellbaren, stabilen Abstand zu dem Sitz kann beispielsweise dadurch erreicht werden, dass mit der Verstelleinrichtung ein Maximalabstand, insbesondere in der geöffneten Stellung des Verschlusselements, zwischen dem Verschlusselement und dem Sitz des Verschlusselements verstellbar ist. Von Vorteil kann dabei sein, dass ein Stellweg, den insbesondere das Verschlusselement ausführen kann, zwischen der Position des Verschlusselements in der geschlossenen Stellung und der Position des Verschlusselements in der vollständig geöffneten Stellung begrenzbar ist.

Die Verstelleinrichtung kann zusätzlich oder alternativ ein Bewegungsgewinde aufweisen. Damit ist eine Umsetzung einer rotatorischen Bedienbewegung in eine Bewegung, welche eine Verstellung des erwähnten Maximalabstandes zur Folge hat, möglich.

Die Verstelleinrichtung kann weiter zusätzlich oder alternativ eine Unterstützungsfeder aufweisen, mit welcher ein Verstellen des Verschlusselements und/oder des Sitzes des Verschlusselements unterstützbar ist. Somit ist eine leichtgängige Bedienbarkeit erreichbar.

In der Praxis kann zusätzlich oder alternativ vorgesehen sein, dass der variable Anschlag oder der Gegenanschlag an einem bewegbaren Bestandteil der Verstelleinrichtung anordbar ist. Der bewegbare Bestandteil kann insbesondere in Relation zu einem Gehäuse des Absperrorgans und/oder zu dem Sitz des Verschlusselements bewegbar sein. Die Anordnung des variablen Anschlags mit einem bewegbaren Bestandteil der Verstelleinrichtung gestattet eine abgestimmte Anordnung des variablen Anschlags auf die Position und/oder die Orientierung des bewegbaren Bestandteils.

Insbesondere kann der variable Anschlag oder der Gegenanschlag lösbar mit dem bewegbaren Bestandteil verbindbar sein. Die lösbare Verbindung erlaubt es, die Position und/oder Orientierung des variablen Anschlags variabel auf die Position und/oder die Orientierung des bewegbaren Bestandteils abzustimmen. Die lösbare Verbindung kann beispielsweise eine formschlüssige Verbindung sein. Eine formschlüssige Verbindung kann besonders einfach gelöst und wieder geschlossen werden.

In der Praxis kann zusätzlich oder alternativ vorgesehen sein, dass die Verstelleinrichtung als eine Mechanik mit einem Stellglied ausgebildet ist, wobei der variable Anschlag variabel an dem Stellglied anordbar ist.

Diese Mechanik kann insbesondere eine Drehmechanik sein. Eine Mechanik ist besonders einfach herzustellen und robust in der Anwendung. Drehmechanik kann von einer Benutzungsperson besonders einfach bedienbar sein.

Insbesondere kann das Stellglied der beschriebene bewegbare Bestandteil der Verstelleinrichtung sein. Zusätzlich oder alternativ kann das Stellglied ein beispielsweise von einer Benutzungsperson drehbares Stellglied sein. Weiter kann das Stellglied in einer Drehebene, in der das drehbare Stellglied in einer Drehrichtung, insbesondere in der beschriebenen Drehrichtung, drehbar ist, rund sein. Das Stellglied kann insbesondere in der Form einer Hülse ausgebildet sein. Zusätzlich oder alternativ kann das Stellglied das insbesondere als Handbedienelement ausgebildete Betätigungsmittel zumindest teilweise in sich aufnehmen.

Durch ein Betätigen, insbesondere ein Drehen, des Stellglieds können das Verschlusselement und der Sitz relativ aufeinander zubewegt oder voneinander wegbewegt werden. Zu diesem Zweck kann die Verstelleinrichtung beispielsweise ein Bewegungsgewinde aufweisen. Somit ist insbesondere eine Umsetzung einer rotatorischen Bedienbewegung in eine Bewegung, welche eine Verstellung des erwähnten Maximalabstandes zur Folge hat, möglich. Das Stellglied ist hierzu bevorzugt dreh- oder schwenkbar gelagert, besonders bevorzugt um eine insbesondere mittig auf das Verschlusselement ausgerichtete Achse.

Das Stellglied kann insbesondere mittels einer mechanischen Anordnung mit dem Verschlusselement und/oder mit dem Sitz des Verschlusselements verbunden sein.

Der variable Anschlag kann lösbar, insbesondere mittels einer formschlüssigen Verbindung, an dem Stellglied anordbar sein. Die formschlüssige Verbindung kann insbesondere in einer Drehrichtung und/oder einer Drehebene der Drehmechanik wirken. Bei einer Drehung des Stellglieds durch eine Benutzungsperson kann dann der an dem Stellglied angeordnete variable Anschlag mitgedreht werden, insbesondere bis der variable Anschlag mit dem Gegenanschlag zusammenwirkt, weiter insbesondere bis der variable Anschlag den Gegenanschlag kontaktiert.

Insbesondere wenn der variable Anschlag wie beschrieben an dem Stellglied anordbar oder angeordnet ist, kann der Gegenanschlag positionsfest an dem Gehäuse des Absperrorgans, oder an einem mit dem Gehäuse positionsfest ausgebildeten oder verbundenen Bestandteil des Absperrorgans ausgebildet oder angeordnet sein. Diese Ausbildung des Absperrorgans ist technisch besonders einfach herzustellen und für die Benutzungsperson besonders einfach zu verwenden.

Es ist auch möglich, dass der variable Anschlag wie beschrieben an dem Stellglied anordbar ist, und der Gegenanschlag ebenfalls variabel an dem Gehäuse des Absperrorgans, oder variabel an dem mit dem Gehäuse positionsfest ausgebildeten oder verbundenen Bestandteil des Absperrorgans anordbar ist. Dadurch können der variable Anschlag und der Gegenanschlag, insbesondere unabhängig voneinander, jeweils in unterschiedlichen Positionen und/oder Orientierungen angeordnet werden, so dass eine besonders große Flexibilität bei der Vornahme der Voreinstellung des Absperrorgans möglich ist.

Weiter ist es auch möglich, dass der Gegenanschlag positionsfest an dem Stellglied angeordnet oder ausgebildet ist, und dass der variable Anschlag variabel an dem Gehäuse des Absperrorgans, oder an einem mit dem Gehäuse positionsfest ausgebildeten oder verbundenen Bestandteil des Absperrorgans anordbar ist. Auf diese Weise besteht die Möglichkeit, einen vorhandenen Bauraum in dem Absperrorgan, an dem Absperrorgan und/oder um das Absperrorgan herum besonders flexibel und effektiv auszunutzen.

Bevorzugt können das Stellglied und der damit formschlüssig verbundene variable Anschlag derart ausgebildet sein, dass die formschlüssige Verbindung in der Drehrichtung und/oder der Drehebene der Drehmechanik wirkt, und die Verbindung in einer quer zu der Drehrichtung und/oder der Drehebene orientierten Richtung lösbar ist. Auf diese Weise kann der variable Anschlag bei einer Drehung des Stellglieds durch eine Benutzungsperson mitgedreht werden und der variable Anschlag kann in einer quer zu der Drehrichtung und/oder der Drehebene orientierten Richtung von dem Stellglied auf einfache Weise abgenommen werden.

In der Praxis kann zusätzlich oder alternativ vorgesehen sein, dass die Verstelleinrichtung eine Kombination aus einer Steuerkurve und einer Mehrzahl von an der Steuerkurve entlanggleitenden Absätzen aufweist. Die Kombination aus einer Steuerkurve und einer Mehrzahl von an der Steuerkurve entlanggleitenden Absätzen ist eine besonders einfache Möglichkeit, um eine rotatorische Bewegung in eine lineare Bewegung umsetzen zu können.

Die Steuerkurve kann beispielsweise als Sägezahnprofil an einem beispielsweise oberen Ende einer Innenseite des beispielsweise als Hülse ausgebildeten Stellglieds ausgebildet sein. Die Absätze können beispielsweise als an der Steuerkurve entlang bewegbare Stifte beispielsweise an einer nach außen weisenden Außenseite des beispielsweise in dem Stellglied aufgenommenen Betätigungsmittels ausgebildet sein. Die Steuerkurve kann dann eine Begrenzung der Bewegungsmöglichkeit des Betätigungsmittels ausbilden.

Wenn das Absperrorgan eine Verstelleinrichtung der hier beschriebenen Art aufweist, kann das Betätigungsmittel mit der bistabilen Stellmechanik diskret verstellbar sein und zusätzlich der Verstelleinrichtung stufenlos verstellbar sein. Beispielsweise auf diese Weise kann der beschriebene Stellweg, den das Verschlusselement ausführen kann, zwischen der Position des Verschlusselements in der geschlossenen Stellung und der Position des Verschlusselements in der vollständig geöffneten Stellung begrenzbar sein.

In der Praxis kann zusätzlich oder alternativ vorgesehen sein, dass das Stellglied eine Mehrzahl von quer zu einer Bewegungsrichtung, insbesondere quer zu einer Drehrichtung oder einer Drehebene der Drehmechanik, führende Führungselemente für die Aufnahme einer Abdeckkappe aufweist, wobei der variable Anschlag an einem oder an mehreren dieser Führungselemente anordbar ist.

Die Führungselemente können beispielsweise Führungsbahnen, Führungsnuten oder Führungsrillen sein. Die einzelnen Führungselemente der Mehrzahl von Führungselementen können insbesondere geometrisch identisch ausgebildet sein.

Die Führungselemente können in vorteilhafter Weise dazu dienen, dass eine Abdeckkappe einfach auf das Stellglied und auf das insbesondere in dem Stellglied teilweise aufgenommene Betätigungsmittel aufsetzbar ist, und dass das Stellglied mit der Abdeckkappe drehbar verbunden ist, insbesondere quer zu der Führung der Führungselemente. Die Abdeckkappe kann zur Ausbildung einer Verbindung mit dem Stellglied eine mit den Führungsnuten korrespondierende Kupplungsgeometrie aufweisen. Zusätzlich können die Führungselemente in vorteilhafter Weise gleichzeitig dazu dienen, den variablen Anschlag aufzunehmen.

Die Abdeckkappe kann insbesondere einen bewegbaren Abschnitt aufweisen, beispielsweise einen Druckpunkt, so dass infolge der Ausübung eines Drucks auf den bewegbaren Abschnitt das Betätigungsmittel insbesondere parallel zu den Führungselementen in die Richtung des Verschlusselements und/oder des Sitzes des Verschlusselement verschiebbar ist, um das Verschlusselement verstellen zu können. Dies erleichtert die Bedienbarkeit, da eine Benutzungsperson leicht zwischen einer Betätigung durch Drücken und einem Betätigen durch Drehen unterscheiden kann. Die Betätigung durch Drücken kann beispielsweise ein Verstellen des Verschlusselements von der geöffneten Stellung in die geschlossene Stellung und umgekehrt bewirken. Die Betätigung durch Drehen kann beispielsweise ein Verstellen des beschriebenen Maximalabstandes bewirken.

Der variable Anschlag kann beispielsweise in eines oder mehrere der hier beschriebenen Führungselemente einsetzbar sein, insbesondere derart, dass zumindest ein Teil des variablen Anschlags von dem Führungselement oder den Führungselementen hervorragt.

Wenn das Stellglied drehbar und insbesondere rund ist, können die Führungselemente an einer Mantelfläche des runden Stellglieds ausgebildet sein.

In der Praxis kann zusätzlich oder alternativ vorgesehen sein, die Stellmechanik und/oder die Verstelleinrichtung eine Push-Push-Verriegelungsmechanik aufweist/aufweisen.

Die Push-Push-Verriegelungsmechanik kann beispielsweise eine Kugelschreibermechanik oder eine Herzkurvenmechanik sein. Insbesondere kann die Push-Push-Verriegelungsmechanik ein Bestandteil der Stellmechanik sein.

Aufgrund der Push-Push-Verriegelungsmechanik kann beispielsweise das als Handbedienelement ausgebildete Betätigungsmittel über einen Anschlagpunkt hinaus verstellbar sein. Von Vorteil ist dabei, dass die bistabile Stellmechanik ansteuerbar ist, wobei ein Wechsel von einer stabilen Position in eine weitere stabile Position durch ein Verstellen über die weitere stabile Position hinaus und anschließendes Zurückfallen in die weitere stabile Position erreichbar ist.

In der Praxis kann zusätzlich oder alternativ vorgesehen sein, dass der variable Anschlag an einem Ringkörper ausgebildet ist.

Ein Ringkörper ist besonders vorteilhaft, weil er kompakt ist und gleichzeitig eine feste, sichere Anordnung des variablen Anschlags ermöglicht. Der Ringkörper kann beispielsweise an dem Stellglied und der Gegenanschlag an dem Gehäuse des Absperrorgans, oder an einem mit dem Gehäuse positionsfest ausgebildeten oder verbundenen Bestandteil des Absperrorgans angeordnet sein. Der variable Anschlag wird dann von dem Ringkörper an dem Stellglied gehalten. Der Ringkörper kann insbesondere an den hier beschriebenen Führungselementen anordbar sein.

Es ist auch möglich, dass der Ringkörper an dem Gehäuse des Absperrorgans, oder an dem mit dem Gehäuse positionsfest ausgebildeten oder verbundenen Bestandteil des Absperrorgans anordbar ist. In diesem Fall kann der Gegenanschlag an dem Betätigungselement vorgesehen sein, wie beschrieben.

In der Praxis kann zusätzlich oder alternativ vorgesehen sein, dass der Ringkörper eine Zahnung aufweist.

Die Zahnung kann insbesondere aus einer Mehrzahl von an dem Ringkörper ausgebildeten Zähnen bestehen. Die Zähne können insbesondere korrespondierend mit der an dem Stellglied ausgebildeten Mehrzahl von Führungselementen ausgebildet sein, weiter insbesondere derart, dass der Ringkörper in verschiedenen Positionen und/oder Orientierungen in Relation zu dem Stellglied und/oder den Führungselementen anordbar ist. Die Zähne können zusätzlich oder alternativ an einem inneren Umfang des Ringkörpers verteilt ausgebildet sein und beispielsweise nach innen hervorragen. Die Zähne können insbesondere mit möglichst großen Abständen zueinander an dem inneren Umfang des Ringkörpers verteilt ausgebildet sein. Aufgrund des größtmöglichen Abstandes zueinander können Kräfte besonders gut aufgenommen werden, Spannungen besonders gut verteilt, und/oder ein Drehmoment von dem Stellglied besonders gut auf den variablen Anschlag eingeleitet werden.

In der Praxis kann zusätzlich oder alternativ vorgesehen sein, dass das Absperrorgan einen invariablen Anschlag, und einen damit zusammenwirkenden zweiten Gegenanschlag aufweist, wobei durch das Zusammenwirken des invariablen Anschlags und des zweiten Gegenanschlags die in der geöffneten Stellung einstellbare Durchflussmenge begrenzt ist.

Der invariable Anschlag kann beispielsweise positionsfest an dem Stellglied oder an einem drehfest mit dem Stellglied verbundenen Bestandteil des Absperrorgans ausgebildet oder angeordnet sein. Der zweite Gegenanschlag kann insbesondere positionsfest an dem Gehäuse des Absperrorgans, oder an dem mit dem Gehäuse positionsfest ausgebildeten oder verbundenen Bestandteil des Absperrorgans ausgebildet oder angeordnet sein.

Der invariable Anschlag und der zweite Gegenanschlag können insbesondere derart ausgebildet sein, dass sie in einer quer und bevorzugt orthogonal zu einer Bewegungsrichtung des Verschlusselements orientierten Richtung miteinander zusammenwirken. Zusätzlich oder alternativ können der invariable Anschlag und der zweite Gegenanschlag in einer um die Bewegungsrichtung des Verschlusselements orientierten Drehrichtung und insbesondere um die hier beschriebene Drehrichtung miteinander zusammenwirken.

Durch einen Kontakt des invariablen Anschlags und des zweiten Gegenanschlags miteinander, kann beispielsweise eine maximale Öffnungsstellung des Absperrorgans in der geöffneten Stellung definiert sein. Zusätzlich oder alternativ kann durch einen Kontakt des invariablen Anschlags und des zweiten Gegenanschlags miteinander eine Schließstellung des Absperrorgans in der geöffneten Stellung definiert sein, in welcher kein Durchfluss durch das Absperrorgan möglich ist, obwohl das Verschlusselement in der hier beschriebenen geöffneten Stellung und nicht in der hier beschriebenen geschlossenen Stellung angeordnet ist. Somit kann beispielsweise eine mechanische Spannung an dem Verschlusselement und dem Sitz des Verschlusselements reduziert und auf den invariablen Anschlag und den Gegenanschlag verlagert werden.

Aufgrund des invariablen Anschlags und des zweiten Gegenanschlags kann eine bestimmte, gewünschte Anordnung des variablen Anschlags besonders einfach erfolgen. Beispielsweise kann das Absperrorgan in der geöffneten Stellung des Verschlusselements in die vollständig geöffnete Stellung oder in die Schließstellung, in welcher kein Durchfluss durch das Absperrorgan möglich ist, gebracht werden. Bezogen auf diese Einstellung kann der variable Anschlag, insbesondere auf Sicht durch eine Benutzungsperson, angeordnet werden.

Insbesondere kann der variable Anschlag mit einem vorbestimmten Versatz zu dem invariablen Anschlag angeordnet werden, wobei der vorbestimmte Versatz beispielsweise mit einer vorbekannten Veränderung der möglichen, durch das Absperrorgan fließenden Durchflussmenge verbunden ist.

In der Praxis kann zusätzlich oder alternativ vorgesehen sein, dass das Absperrorgan ein Membranventil mit Durchflusseinstellung ist. Ein Membranventil mit Durchflusseinstellung ist besonders einfach zu bedienen und kompakt. Insbesondere kann bei einem Membranventil mit Durchflusseinstellung besonders einfach mittels eines variablen Anschlags die in der geöffneten Stellung des Verschlusselements durch das Membranventil strömende Durchflussmenge eines fließfähigen Mediums eingestellt werden.

Bei dem Membranventil mit Durchflusseinstellung kann insbesondere vorgesehen sein, dass das Verschlusselement und/oder der Sitz mit der Verstelleinrichtung und/oder mit der Stellmechanik betätigbar und insbesondere verstellbar sein kann/können. Weiter insbesondere kann das Verschlusselement mit dem bevorzugt als Handbedienelement ausgebildeten Betätigungsmittel betätigbar sein. Dabei kann ein Steuerelement mit dem insbesondere als Handbedienelement ausgebildeten Betätigungsmittel in Wirkverbindung stehen, wobei das Verschlusselement mit einem, bezogen auf die Lage zu dem Betätigungsmittel, distalen Ende des Steuerelements betätigbar sein kann. Das Steuerelement kann insbesondere ein Bestandteil der erwähnten mechanischen Anordnung sein, mittels welcher das Stellglied und/oder das Betätigungsmittel mit dem Verschlusselement und/oder mit dem Sitz des Verschlusselements verbunden sein kann.

Zusätzlich oder alternativ kann in der Wirkverbindung zwischen dem Steuerelement und dem Betätigungsmittel eine Ausgleichvorrichtung ausgebildet oder angeordnet sein. Die Ausgleichvorrichtung kann einen in einer Aufnahme beweglich geführten Stößel aufweisen und eine Relativbewegung des Betätigungsmittels gegen das Steuerelement zulassen.

Wenn das Absperrorgan die Verstelleinrichtung und das Steuerelement aufweist, kann der mit der beschriebenen Verstelleinrichtung einstellbare Maximalabstand zwischen dem Sitz und dem Verschlusselement beispielsweise dadurch einstellbar sein, dass mit der Verstelleinrichtung ein Maximalabstand zwischen dem Betätigungsmittel und dem distalen Ende des Steuerelements, bezogen auf die Lage zu dem Betätigungsmittel, verstellbar ist oder verstellt wird. Beispielsweise kann hierzu das Steuerelement unabhängig vom Betätigungsmittel oder das Betätigungsmittel unabhängig vom Steuerelement in seiner Lage verstellbar sein. Alternativ oder zusätzlich kann der Maximalabstand zwischen dem Sitz und dem distalen Ende des Steuerelements dadurch verstellbar sein, dass das Betätigungsmittel mit dem Steuerelement gemeinsam in der Lage verstellbar ist. Mit der Ausgleichvorrichtung kann auch die im Zusammenhang mit der Push-Push-Verrieglungsmechanik beschriebene Verstellbarkeit des Betätigungsmittels über den Anschlagpunkt hinaus erzielt werden.

Zusätzlich oder alternativ kann ein Rückstellelement vorhanden sein, das der hier beschriebenen Relativbewegung eine Rückstellkraft entgegensetzt. Im Zusammenhang mit der Push-Push-Verrieglungsmechanik kann das Rückstellelement die nötige Bewegungsfreiheit zwischen der Aufnahme und dem Stößel erlauben, da das Steuerelement nicht über die im Zusammenhang mit der Push-Push-Verrieglungsmechanik beschriebene weitere stabile Position, in welcher das Verschlusselement beispielsweise in der geschlossenen Stellung angeordnet ist, hinaus bewegbar ist. Das Rückstellelement kann somit gleichzeitig eine Betätigungskraft zur Verstellung des Verschlusselements vermitteln. Das Rückstellelement kann beispielsweise außerhalb der Ausgleichvorrichtung angeordnet sein. Somit sind Behinderungen der Beweglichkeit des Stößels durch das Rückstellelement in der Aufnahme vermeidbar.

Die Aufnahme kann eine Begrenzung bilden, gegen den das Rückstellelement den Stößel in einer Ruheposition drückt. Somit ist eine definierte Ruheposition bildbar.

Der Stößel kann insbesondere an einem, bezogen auf die Lage zu dem Betätigungsmittel, proximalen Ende des Steuerelements ausgebildet sein. Somit ist einfach erreichbar, dass der Stößel und das Steuerelement aus demselben Material gefertigt sind. Es ist auch erreichbar, dass die Aufnahme und das Steuerelement aus unterschiedlichen Materialien fertigbar sind. Dies ist günstig, weil die Aufnahme als komplexe Form einfach in Kunststoff fertigbar sein kann, während für das Steuerelement zur Erreichung einer größeren Belastbarkeit und Knickfestigkeit ein metallischer Werkstoff besser geeignet sein kann.

Die Verstelleinrichtung kann insbesondere zwischen der Ausgleichvorrichtung und dem insbesondere als Handbedienelement ausgebildeten Betätigungsmittel angeordnet sein. Somit ist eine kompakte Betätigungsvorrichtung ausbildbar. Die Verstelleinrichtung ist somit einfach außerhalb eines abgedichteten Bereichs des Absperrrorgans anordbar. Hierbei ist es günstig, wenn die Verstelleinrichtung zu einer Verstellung eines Abstands zwischen der Ausgleichvorrichtung und dem Betätigungsmittel ausgebildet ist. Somit ist eine einfache Begrenzung des Verstellwegs des Verschlusselements erreichbar, indem sich eine Ruheposition des Stößels in der Aufnahme verlagert.

Es kann weiter zusätzlich oder alternativ vorgesehen sein, dass die Aufnahme der Ausgleichvorrichtung fest an dem insbesondere als Handbedienelement ausgebildeten Betätigungsmittel ausgebildet oder angeordnet ist. Somit ist die Aufnahme einfach und sicher manuell von außen betätigbar und verstellbar.

Weiter zusätzlich oder alternativ kann vorgesehen sein, dass das insbesondere als Ventil ausgebildete Absperrorgan eine Druckkammer aufweist, die über eine Befüllöffnung fluidal mit dem Zulauf des Absperrorgans und über eine Ablauföffnung fluidal mit dem Ablauf des Absperrorgans verbunden ist, wobei das Verschlusselement mittels eines in der Druckkammer erzeugten Drucks beaufschlagbar sein kann. Das beschriebene Verschlusselement kann dann ein erstes Verschlusselement sein, das auch aus Hauptverschlusselement bezeichnet werden kann, und der vorbeschriebene Sitz kann ein Hauptsitz sein. Die Ablauföffnung kann mit einem zweiten Verschlusselement, das beispielsweise Bestandteil eines Pilotventils sein kann, öffenbar und verschließbar sein. Somit kann ein Servo-Betätiger ausgebildet sein, welcher mittels eines am Zulauf anliegenden Fluiddrucks eine Verstärkung einer über das Betätigungsmittel eingebrachten Stellkraft bewirkt. Die beschriebene Ausgleichvorrichtung ermöglicht hierbei, dass das Hauptverschlusselement, insbesondere gemeinsam mit dem zweiten Verschlusselement, nachgeführt wird oder nachführbar ist, wenn sich der Druck in der Druckkammer aufbaut und das Hauptverschlusselement gegen dessen Sitz gedrückt werden kann. Somit ist die Ablauföffnung geschlossen haltbar, indem das zweite Verschlusselement bewegbar ist. Es ist somit eine Betätigung mit vergleichsweise kleinem Kraftaufwand ausübbar. Die Verstärkung kann hierbei durch einen Druck in der Druckkammer erreichbar sein, die über das Stellelement zwischen einem befüllten, druckbeaufschlagten und somit schließenden Zustand und einem drucklosen, freigebenden Zustand schaltbar ist.

Bevorzugt kann das zweite Verschlusselement an dem distalen Ende des Steuerelements angeordnet oder ausgebildet sein. Somit sind zusätzliche Übertragungselemente zwischen dem Steuerelement und dem zweiten Verschlusselement verzichtbar. Dies vereinfacht den konstruktiven Aufbau.

Die Druckkammer kann insbesondere zum Betätigungsmittel durch eine Dichtung abgedichtet sein. Somit ist ein Abschluss der Druckkammer nach außen einfach erreichbar. Insbesondere kann hierbei vorgesehen sein, dass die Dichtung an dem Steuerelement anliegt. Somit ist ein Eintritt des Steuerelements in die Druckkammer möglich. Alternativ oder zusätzlich kann vorgesehen sein, dass die Dichtung an der Ausgleichvorrichtung anliegt. Somit ist eine alternative Einführung einer Betätigungsbewegung in die Druckkammer, insbesondere zum Verstellen des insbesondere zweiten Veschlusselements möglich.

Zusätzlich oder alternativ kann vorgesehen sein, dass das Hauptverschlusselement einen festen Hauptkörper und eine den Hauptkörper tragende elastische Membran aufweist, mit welcher der Hauptkörper an dem Gehäuse des Absperrorgans aufgehängt ist. Somit kann das Hauptverschlusselement, insbesondere der feste Hauptkörper, einfach bewegt werden und es ist gleichzeitig sicher befestigt. Der Hauptkörper kann an dem Hauptsitz anlegbar sein und die Befüllöffnung aufweisen. In diesem Zusammenhang kann zusätzlich ein in die Befüllöffnung hineinragender Reinigungsstift vorgesehen sein. Wenn der Hauptkörper sich mit der Befüllöffnung in Relation zu dem Reinigungsstift bewegt, kann eine Selbstreinigung im Betrieb ermöglicht werden.

Die Druckkammer kann insbesondere durch die insbesondere an dem Gehäuse festgelegte Membran begrenzt sein. Es ist somit eine im Wesentlichen zweischalige Druckkammer bildbar, die einfach fertigbar ist. Besonders günstig ist hierbei eine Kombination mit der bereits erwähnten Abdichtung gegen das Betätigungsmittel. Insbesondere kann hierbei vorgesehen sein, dass die Membran zwischen zwei Gehäuseteilen des Gehäuses des Absperrorgans eingespannt ist. Somit ist ein einfacher und dichter Halt der Membran an dem Gehäuse erreichbar.

Die bereits erwähnte Ablauföffnung der Druckkammer kann in einer Verlängerung des Steuerelements angeordnet sein. Somit ist das zweite Verschlusselement zum Öffnen und Schließen der Ablauföffnung durch das Steuerelement, insbesondere wenn dieses stabförmig ist, einfach und direkt ansteuerbar.

Der Sitz, insbesondere der Hauptsitz, kann beispielsweise ringförmig ausgebildet sein. Insbesondere kann/können das erste und/oder das zweite Verschlusselement orthogonal zu einer von dem zugehörigen Sitz aufgespannten Fläche bewegbar sein. Der Sitz kann dann als eine sichere Auflage für das jeweilige Verschlusselement dienen.

Der Ablauf kann beispielsweise in einer Verlängerung der Ablauföffnung angeordnet sein. Somit ist eine platzsparende Bauweise, in der beispielsweise das Steuerelement, das zweite Verschlusselement und das Hauptverschlusselement hintereinander auf einer gedachten Linie angeordnet sind, erreichbar.

Zusätzlich oder alternativ kann das Absperrorgan so ausgebildet sein, dass das Rückstellelement das Steuerelement beaufschlagt. Somit ist eine unmittelbare Einbringung der Rückstellkraft auf das Steuerelement erreichbar. Es ist auch eine platzsparende Bauweise erreichbar. Das Rückstellelement kann hierbei beispielsweise auf Zug oder auf Druck beaufschlagen. Bevorzugt ist das Steuerelement durch das Rückstellelement druckbeaufschlagt. Dies ermöglicht ein geringes Baumaß längs des Steuerelements mit dem ein Abstützen der Rückstellkraft einfach erreichbar ist.

Das Rückstellelement kann beispielsweise eine Schraubenfeder sein. Somit ist eine Rückstellkraft mit einem konstruktiv einfachen Bauteil entwickelbar. Eine Rückstellkraft längs des Steuerelements ist einfach entwickelbar.

Das Betätigungsmittel kann von einer Betätigungsmittel-Rückstellfeder beaufschlagt sein. Wenn das Betätigungsmittel als Handbedienelement ausgebildet ist, kann die Betätigungsmittel-Rückstellfeder auch als Handbedienelement-Rückstellfeder bezeichnet werden. Von Vorteil ist bei der Ausbildung der Betätigungsmittel-Rückstellfeder, dass eine Rückstellung des Betätigungsmittels unabhängig von der Ausgleichvorrichtung erreichbar ist. Insbesondere wenn das Rückstellelement vorgesehen ist, kann hierbei vorgesehen sein, dass die Betätigungsmittel-Rückstellfeder eine größere Kraft entwickelt als das Rückstellelement. Somit ist eine mit dem Rückstellelement erzeugbare Kraft leicht von einer mit der Betätigungsmittel-Rückstellfeder erzeugbaren Kraft überwindbar. Bevorzugt sind die Rückstellkräfte des Rückstellelements einerseits und der Betätigungsmittel-Rückstellfeder andererseits parallel und/oder gegenläufig zueinander ausgerichtet.

Insbesondere kann vorgesehen sein, dass die Betätigungsmittel-Rückstellfeder als eine Schraubenfeder ausgebildet ist, insbesondere wobei die Betätigungsmittel-Rückstellfeder das Steuerelement und/oder die Ausgleichvorrichtung umgreift. Somit ist eine platzsparende Anordnung möglich.

Das Betätigungsmittel kann insbesondere derart ausgebildet sein, dass es die Ausgleichvorrichtung und/oder das Steuerelement haubenförmig zumindest teilweise aufnimmt oder übergreift. Somit ist eine geringe Längsabmessung der Vorrichtung erreichbar.

Das Steuerelement kann beispielsweise stabförmig ausgebildet sein und/oder an einem vom Verschlusselement abgewandten Ende eine Querschnittsverdickung aufweisen. Somit ist eine Anlagefläche ausbildbar, mit welcher das Steuerelement in einer Ruheposition in der Aufnahme der Ausgleichvorrichtung haltbar ist. Das insbesondere stabförmige Steuerelement kann beispielsweise in der Längsrichtung verschiebbar angeordnet sein. Somit ist das Steuerelement einfach linear führbar.

Zusätzlich oder alternativ kann vorgesehen sein, dass eine mit dem zweiten Verschlusselement abdeckbare Querschnittsfläche an der Ablauföffnung größer ist als eine Querschnittsfläche des Steuerelements an dessen Austritt aus der Druckkammer. Somit ist vermeidbar, dass - beispielsweise bei einem in die Druckkammer vermittelten Druckschlag - sich das Verschlusselement selbsttätig von der Ablauföffnung entfernt und diese unkontrolliert freigibt. Von Vorteil ist weiter, dass das Rückstellelement, mit welchem das Verschlusselement in seine Schließstellung überführbar ist, mit einer geringen Federkraft ausstattbar ist. Dies hat den weiteren Vorteil, dass die Betätigungsmittel-Rückstellfeder, welche eine Rückstellbewegung des Betätigungsmittels bewirken kann, ebenfalls nicht mit großer Federkraft dimensioniert werden muss. Auf diese Weise ist ein leicht gängiges Schaltverhalten erreichbar.

Vorzugsweise ist hierbei vorgesehen, dass das zweite Verschlusselement an dem distalen Ende des Steuerelements angeordnet ist. Es ist somit eine Ansteuerung des zweiten Verschlusselements - beispielweise über das beschriebene Betätigungsmittel - einfach ausführbar. Die abdeckbare Querschnittfläche kann beispielsweise wenigstens doppelt so groß wie die Querschnittsfläche des Steuerelements sein. Beispielsweise kann die abdeckbare Querschnittsfläche durch einen Pilotventilsitz, der mit dem zweiten Verschlusselement zusammenwirkt, definiert sein.

Wieder zusätzlich oder alternativ kann vorgesehen sein, dass an dem Hauptkörper ein Pilotventilsitz, der mit dem zweiten Verschlusselement verschließbar und freigebbar ist, ausgebildet ist und dass die Ablauföffnung in Strömungsrichtung hinter dem Pilotventilsitz eine vorzugsweise trichterförmige Verengung formt. Von Vorteil ist dabei, dass die Auslassöffnung möglichst klein, beispielsweise im Durchmesser höchstens halb so groß oder sogar höchstens ein Viertel so groß wie der Pilotventilsitz, ausbildbar ist.

Die Erfindung wird nun anhand eines Ausführungsbeispiels näher erläutert, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder mit einzelnen oder mehreren Merkmalen des Ausführungsbeispiels.

Es zeigt:
- Fig. 1: eine dreidimensionale Außenansicht auf ein hier beschriebenes Absperrorgan,
- Fig. 2: einen Längsschnitt des Absperrorgans aus Fig. 1,
- Fig. 3: ein Betätigungsmittel und Stellglied des in Fig. 1 gezeigten Absperrorgans, jeweils in einer isolierten dreidimensionalen Darstellung,
- Fig. 4A, 4B: einen Vergleich des Absperrorgans aus Fig. 1 mit bzw. ohne teilweise entferntes Gehäuse, zur Darstellung des variablen Anschlags und des invariablen Anschlags, in einer ersten Öffnungsstellung,
- Fig. 5A, 5B: einen Vergleich des Absperrorgans aus Fig.1 in einer zu Fig. 4A, 4B analogen Darstellung, mit einem gegenüber dem in Fig. 4A, 4B versetzt angeordneten variablen Anschlag.

Bei der nachfolgenden Beschreibung verschiedener Figuren erhalten in ihrer Funktion übereinstimmende Elemente auch bei abweichender Gestaltung oder Formgebung übereinstimmende Bezugszeichen. Zur besseren Übersicht sind in den Figuren nicht alle Bezugszeichen gesetzt, obwohl die Elemente sehr wohl in den Figuren vorhanden sein können.

Zunächst werden hier nachfolgend der allgemeine Aufbau und die Funktionsweise eines Ausführungsbeispiels eines Absperrorgans im Sinne der Erfindung beschrieben. Anschließend werden Details zu einem variablen Anschlag des Absperrorgans beschrieben.

Die Figuren zeigen das gleiche Ausführungsbeispiel des hier beschriebenen Absperrorgans für ein fließfähiges Medium. Bei dem in den Figuren gezeigten und hier beschriebenen Ausführungsbeispiel ist das Absperrorgan 1 als ein Ventil 1 ausgebildet.

Das Ventil 1 kann auf diskrete Weise in einen geschlossenen Zustand und einen geöffneten Zustand geschaltet werden. In dem geschlossenen Zustand kann das Ventil 1 einen Durchfluss eines fließfähigen Mediums unterbinden. In dem geöffneten Zustand kann das Ventil 1 einen Durchfluss eines fließfähigen Mediums zulassen. In dem geöffneten Zustand kann eine Durchflussrate eines fließfähigen Mediums, die zwischen einer maximal möglichen Durchflussrate im geöffneten Zustand und dem unterbundenen Durchfluss liegen kann, stufenlos eingestellt werden. Dieser Zustand, in dem die Durchflussrate des fließfähigen Mediums zwischen der maximal möglichen Durchflussrate im geöffneten Zustand und dem unterbundenen Durchfluss liegt, kann auch als ein Zwischenzustand bezeichnet werden.

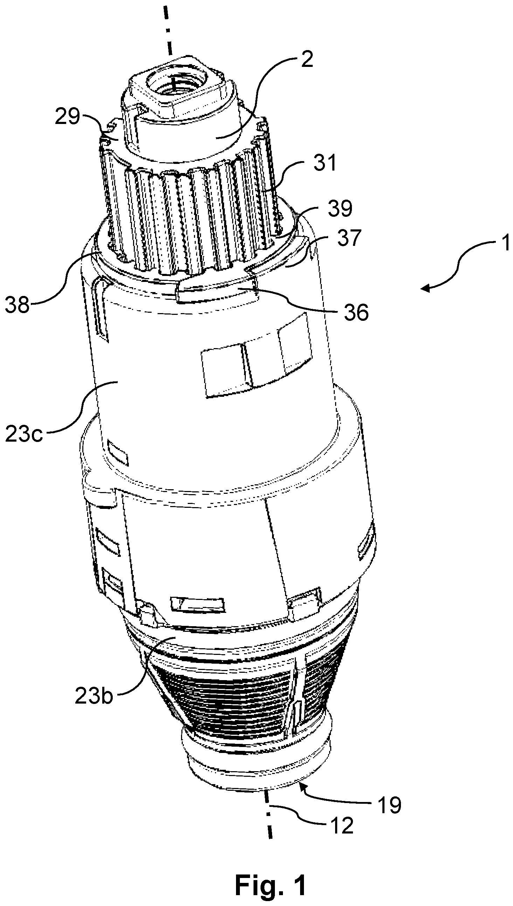

Die Figuren 1, 2, 4 und 5 zeigen das Ventil 1 im geöffneten Zustand. Insbesondere befindet sich das Ventil 1 dabei in einem Zwischenzustand, in dem ein Durchfluss durch das Ventil 1 vollständig unterbunden ist. Der Durchfluss ist folglich identisch zu dem Durchfluss im geschlossenen Zustand des Ventils 1.

Das Schalten zwischen dem geöffneten Zustand und dem geschlossenen Zustand erfolgt mittels eines Betätigungsmittels 2 des Ventils 1, wobei das Betätigungsmittel 2 im hier beschriebenen Ausführungsbeispiel als ein Handbedienelement 2 ausgebildet ist und dazu dient, ein als Hauptverschlusselement 3 ausgebildetes erstes Verschlusselement 3 zu verlagern.

Das Hauptverschlusselement 3 des Ventils 1 liegt dichtend an einem als Hauptventilsitz 4 ausgebildeten ersten Sitz 4 des Ventils 1 an. Das Hauptverschlusselement 3 und der Hauptventilsitz 4 bilden somit gemeinsam ein als ein Hauptventil ausgebildetes Haupt-Absperrorgan aus.

Mit dem Schalten des Ventils 1 von dem geschlossenen Zustand in den geöffneten Zustand kann das Hauptverschlusselement 3 verlagert werden, so dass es einen vordefinierten Abstand zu dem Hauptventilsitz 4 aufweist. In Abhängigkeit von dem vordefinierten Abstand des Hauptverschlusselements 3 zu dem Hauptsitz 4 im geöffneten Zustand kann eine Strömung eines fließfähigen Mediums schwächer oder stärker gedrosselt werden (schwächere Drosslung, wenn der Abstand groß ist und stärkere Drosslung, wenn der Abstand gering ist).

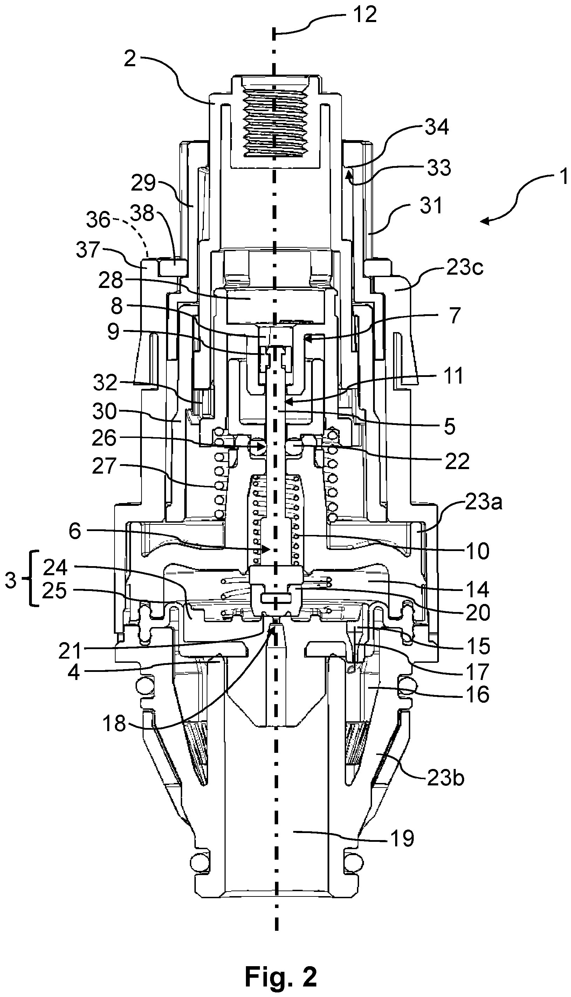

Zwischen dem Handbedienelement 2 und dem Hauptverschlusselement 3 ist ein insbesondere in Fig. 2 zu erkennendes Steuerelement 5 angeordnet, welches eine von einer Benutzungsperson an dem Handbedienelement 2 ausgeübte Bedienbewegung an das Hauptverschlusselement 3 vermittelt.

An einem distalen Ende 6 des Steuerelements 5, bezogen auf die Lage zu dem Handbedienelement 2, ist das Steuerelement 5 derart mit dem Hauptverschlusselement 3 gekoppelt, dass das Hauptverschlusselement 3 mit dem Steuerelement 5 zwischen der geöffneten Stellung und der geschlossenen Stellung verlagerbar ist. Insbesondere liegt das Steuerelement 5 mit dem distalen Ende 6 beweglich an dem Hauptverschlusselement 3 an.

Die Kopplung ist beispielsweise lösbar und insbesondere lose, so dass in der beweglichen Anlage eine in die Richtung des Hauptverschlusselements 3 gerichtete Bewegung des Steuerelements 5 eine Verschiebung des Hauptverschlusselements 3 bewirkt und eine in die Richtung des Steuerelements 5 gerichtete Bewegung des Hauptverschlusselements 3 eine Verschiebung des Steuerelements 5 bewirkt. Bei einer entgegen der Richtung des Hauptverschlusselements 3 gerichteten Bewegung des Steuerelements 5 und/oder bei einer entgegen der Richtung des Steuerelements 5 gerichteten Bewegung des Hauptverschlusselements 3 sind das Hauptverschlusselement 3 und das Steuerelement 5 voneinander trennbar.

Diese Kopplung kann vorteilhaft für die Funktionalität des Ventils 1 sein. Denn aufgrund dieser Kopplung können das Hauptverschlusselement 3 und das Steuerelement 5 in unterschiedlichen Situationen gemeinsam oder separat bewegt werden.

Zwischen dem Handbedienelement 2 und dem Steuerelement 5 ist eine in Fig. 2 zu erkennende Ausgleichvorrichtung 7 ausgebildet, welche eine Betätigung des Handbedienelements 2 an das Steuerelement 5 vermittelt.

Hierzu weist die Ausgleichvorrichtung 7 eine Aufnahme 8 auf, in der ein Stößel 9 gleitend beweglich linear geführt ist. Diese Bewegungsfreiheit des Stößels 9 führt dazu, dass das Steuerelement 5 relativ zu dem Handbedienelement 2 beweglich ist.

Um das Steuerelement 5 in einer bevorzugten Ruhestellung relativ zu dem Handbedienelement 2 zu halten, ist in dem Ventil 1 ein Rückstellelement 10 ausgebildet. Dieses Rückstellelement 10 entwickelt eine Rückstellkraft, um das Steuerelement 5, sofern die Stellung dieses Steuerelements 5 dies zulässt, in der Ruhestellung in der Aufnahme 8 zu halten.

Das Rückstellelement 10 ist außerhalb der Ausgleichvorrichtung 7 und insbesondere außerhalb der Aufnahme 8 angeordnet. Somit ist eine Behinderung der Gleitbewegung des Stößels 9 in der Aufnahme 8 vermeidbar. Der Stößel 9, der in der Aufnahme 8 geführt ist, ist direkt mit dem auf die Lage zu dem Handbedienelement 2 bezogenen proximalen Ende 11 des Steuerelements 5 mechanisch verbunden.

Die Aufnahme 8 der Ausgleichvorrichtung 7 ist dagegen mit dem Handbedienelement 2 verbunden.

Durch die Längsachse 12 des Ventils 1 ist eine Stößel-Führungsrichtung vorgegeben, entlang welcher der Stößel 9 in der Aufnahme 8 verschieblich geführt ist.

Wie insbesondere in Fig. 2 zu erkennen ist, weist das Ventil 1 eine Druckkammer 14 auf, welche durch eine Befüllöffnung 15 fluidal mit einem Zulauf 16 des Ventils 1 verbunden ist. In der Befüllöffnung 15 ist ein Reinigungsstift 17 angeordnet, der verhindert, dass sich die Befüllöffnung 15 zusetzen kann. Durch eine Ablauföffnung 18 ist die Druckkammer 14 mit einem Ablauf 19 des Ventils fluidal verbunden.

Die Druckkammer 14 ist derart ausgebildet, dass das Steuerelement 5 zumindest mit einem Abschnitt, der das distale Ende 6 enthält, in der Druckkammer 14 angeordnet ist. Die Druckkammer 14 ist gegen das Handbedienelement 2 und gegen einen Abschnitt des Steuerelements 5, der das proximale Ende 11 enthält, durch eine Dichtung 22 abgedichtet. Die Dichtung 22 liegt hierbei an einem Bauteil 23a des Ventils 1 an, welches ein Gehäuseteil 23a eines Gehäuses des Ventils 1 darstellt.

Die Ausgleichvorrichtung 7 befindet sich in der Fig. 2 oberhalb der Dichtung 22 und folglich außerhalb der Druckkammer 14. Das Steuerelement 5 ist verschiebbar in dem Gehäuseteil 23a angeordnet. Wenn das Ventil 1 geschaltet wird, wird die Dichtung 22 mit der Ausgleichvorrichtung 7 mitbewegt. Die Dichtung 22 ist ein Dichtring, der eine Durchtrittsöffnung 26 umgibt, durch welche das Steuerelement 5 dichtend aus der Druckkammer 14 nach außen geführt ist, so dass die Druckkammer 14 in der in Fig. 2 gezeigten Darstellung nach oben abgeschlossen ist.

Auf der der Durchtrittsöffnung 26 gegenüberliegenden Seite ist die Druckkammer 14 von dem Hauptverschlusselement 3 abgeschlossen.

Das Hauptverschlusselement 3 weist einen Hauptkörper 24 und eine Membran 25 auf. Die Membran 25 ist insbesondere im Wesentlichen ringförmig ausgebildet und mit einem inneren Rand dichtend an einem Umfang des Hauptkörpers 24 angeordnet. Mit einem äußeren Rand ist die Membran 25 dichtend zwischen den als Gehäuseteile ausgebildeten Bauteilen 23a und 23b eingespannt. Die Membran 25 trägt den Hauptkörper 24 mit der Befüllöffnung 15. Aufgrund der schwingungsfähigen Membran 25 ist das Hauptverschlusselement 3 und insbesondere der Hauptkörper 24 entlang der Längsachse 12 schwingungsfähig, d.h. beweglich mit den Gehäuseteilen 23a, 23b verbunden.

Die Druckkammer ist folglich - mit Ausnahme der Befüllöffnung - verschließbar.

Wenn in dem Zulauf 16 ein Druck eines fließfähigen Mediums anliegt, wird die Druckkammer 14 durch die Befüllöffnung 15 mit dem fließfähigen Medium befüllt.

Unter Zuhilfenahme des fließfähigen Mediums und eines damit in der Druckkammer 14 erzeugten Drucks kann das Hauptverschlusselement 3 einfach verstellt werden und somit der Ablauf 19 fluidal von dem Zulauf 16 getrennt oder fluidal damit verbunden werden. Es ist somit ein Servo-Betätiger ausgebildet, welcher mittels des am Zulauf 16 anliegenden Fluiddrucks eine Verstärkung einer über das Handbedienelement 3 eingebrachten Stellkraft bewirkt.

Damit der Servo-Betätiger besonders einfach funktioniert, ist das Steuerelement 5 an dessen distalem Ende 6, bezogen auf die Lage zu dem Handbedienelement 2, mit einem zweiten Verschlusselement 20 verbunden. Das zweite Verschlusselement 20 ist als ein Pilotverschlusselement ausgebildet.

Korrespondierend zu dem Pilotverschlusselement 20 ist in dem Hauptverschlusselement 3 die Ablauföffnung 18 ausgebildet. Die Ablauföffnung 18 ist von einem zweiten Sitz 21 des Ventils 1 umgeben, welcher als ein Pilotventilsitz ausgebildet ist. In dem Bereich des Pilotventilsitzes 21 weist die Ablauföffnung 18 einen Querschnitt auf, der größer ist als ein Querschnitt der Befüllöffnung 15. Das Pilotverschlusselement 20 und der Pilotventilsitz 21 bilden gemeinsam ein als ein Pilotventil ausgebildetes Pilot-Absperrorgan aus. Die Ablauföffnung 18 ist somit mit dem Pilotverschlusselement 20 verschließbar, wenn das Pilotverschlusselement 20 an dem Pilotventilsitz 21 anliegt, oder öffenbar, also freigebbar, wenn das Pilotventil 20 nicht an dem Pilotventilsitz 21 anliegt.

Mit dem Pilotverschlusselement 20 ist somit steuerbar, ob sich in der Druckkammer 14 durch die Befüllöffnung 15 ein Druck aufbaut, was bei verschlossener Ablauföffnung 18 der Fall ist, oder ob dieser aufgebaute Druck sich wieder abbaut, indem die Ablauföffnung 18 durch das Pilotverschlusselement 20 freigegeben ist.

Aus Fig. 2 ist ersichtlich, dass die Ablauföffnung 18 und der Ablauf 19 in einer Verlängerung des Steuerelements 5 längs der Längsachse 12, also längs der Verstellrichtung des Steuerelements 5, hintereinander angeordnet sind.

Für ein besonders einfaches Schalten des Ventils 1 ist der mit dem Pilotverschlusselement 20 abdeckbare Querschnitt der Ablauföffnung 18 so groß, dass das Pilotverschlusselement 20 mit dem Steuerelement 5 durch einen Innendruck in der Druckkammer 14 in die Richtung einer geschlossenen Stellung, in welcher die Ablauföffnung 18 verschlossen ist, getrieben wird.

Dies wird insbesondere dadurch erreicht, dass die mit dem Pilotverschlusselement 20 abdeckbare Querschnittsfläche an der Ablauföffnung 18 größer ist als eine Querschnittsfläche des Steuerelements 5 an dessen Austritt aus der Druckkammer 14, also im Bereich der Durchtrittsöffnung 26. Über die größere Querschnittsfläche an der Ablauföffnung 18 drückt ein fließfähiges Medium in der Druckkammer 14 das Steuerelement 5 im Ergebnis mit einer größeren Kraft in die Richtung der Ablauföffnung 18.

Somit kann das Rückstellelement 10, welches das Steuerelement 5 ebenfalls in die Richtung der Ablauföffnung 18 treibt, mit einer vergleichsweise geringen Federkraft dimensioniert werden. Dies ermöglicht, dass die Handbedienelement-Rückstellfeder 27, welche das Steuerelement 5 über das Handbedienelement 2 und den Stößel 9 entgegen der Richtung der Ablauföffnung 18 treibt, ebenfalls mit vergleichsweiser geringer Federkraft dimensioniert werden kann. Auf diese Weise ist ein leichtgängiges Schaltverhalten erreichbar.

Das Rückstellelement 10 ist als Schraubenfeder ausgebildet und beaufschlagt das Steuerelement 5 auf Druck. Hierbei stützt sich das Rückstellelement 10 an dem Gehäuseteil 23a ab.

Das Handbedienelement 2 wird von der Handbedienelement-Rückstellfeder 27 beaufschlagt, die sich ebenfalls an dem Gehäuseteil 23a abstützt. Damit das Handbedienelement 2 das Steuerelement 5 in die geöffnete, die Ablauföffnung 18 öffnende Stellung überführen kann, ist die Handbedienelement-Rückstellfeder 27 so ausgebildet, dass sie eine größere Kraft entwickelt als das Rückstellelement 10.

Sowohl das Rückstellelement 10 als auch die Handbedienelement-Rückstellfeder 27 sind als Schraubenfedern ausgebildet, die das Steuerelement 5 umgreifen und in sich aufnehmen.

Die Ausgleichvorrichtung 7 ist entlang der Längsachse 12 oberhalb der Handbedienelement-Rückstellfeder 27 angeordnet.

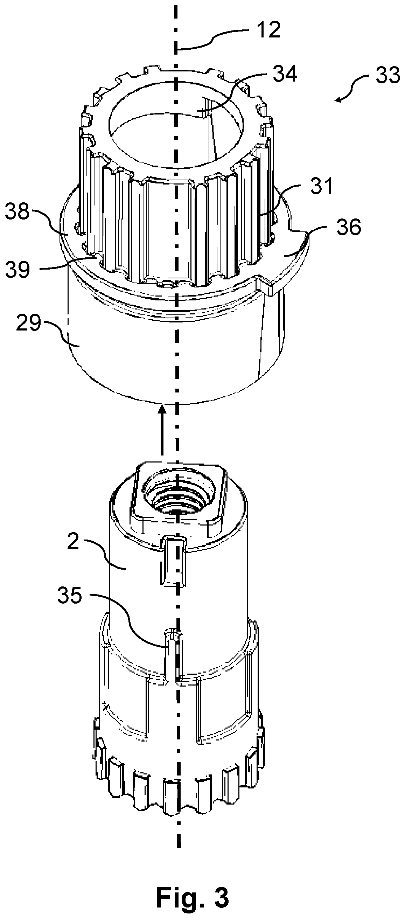

Wie in Fig. 2 und Fig. 3 gezeigt, ist das Handbedienelement 2 haubenförmig ausgebildet und es nimmt in seinem Innenraum 28 die Ausgleichvorrichtung 7 auf. Gleichzeitig wird das Handbedienelement 2 zumindest teilweise in einer ersten Hülse 29 und in einer zweiten Hülse 30 gehalten. Die erste Hülse 29 bildet dabei ein Stellglied 29.

Das Stellglied 29 hat eine runde Grundform und weist in einem oberen Bereich radial außen eine Mehrzahl von Führungselementen 31 auf, an welchen eine in den Figuren nicht gezeigte Abdeckkappe mit einer korrespondierenden Kupplungsgeometrie von oben an dem Handbedienelement 2 anordbar ist. Die an den Führungselementen 31 angeordnete Abdeckkappe kann gemeinsam mit dem Handbedienelement 2 indem Gehäuseteil 23c bzw. an dem Gehäuseteil 23c gedreht bzw. geschwenkt werden.

Die zweite Hülse 30 ist teilweise in das Stellglied 29 eingesetzt und in Bezug auf das Gehäuse des Ventils drehfest. Das Stellglied 29 und die zweite Hülse 30 sind jeweils in der Längsachse 12 festgelegt und sie bilden jeweils eine Begrenzung für eine Bewegung des Handbedienelements 2 entlang der Längsachse 12 aus.

Das Ventil 1 weist eine bistabile Stellmechanik 32 auf, die eine Push-Push-Verriegelungsmechanik bildet, beispielsweise eine Kugelschreibermechanik oder eine Herzkurvenmechanik. Mit der Stellmechanik 32 ist das Handbedienelement 2 an der zweiten Hülse 30 zwischen einer oberen Stellung, in welcher das Hauptverschlusselement 3 die geöffnete Stellung einnehmen kann, und einer unteren Stellung, in welcher das Hauptverschlusselement 3 die geschlossene Stellung einnehmen kann, durch Drücken längs der Längsachse 12 diskret, **d.h.** ohne die Einnahme einer stabilen Zwischenstellung, verstellbar.

Das Ventil 1 weist ferner eine als Drehmechanik ausgebildete Verstelleinrichtung 33 auf, die insbesondere in Fig. 3 gezeigt ist. Mit der Verstelleinrichtung 33 ist ein Maximalabstand zwischen dem Pilotverschlusselement 20 und der genannten Begrenzung in dem Stellglied 29 für die Bewegung des Handbedienelements 2 entlang der Längsachse 12 verstellbar. Dadurch dass das Hauptverschlusselement 3 in der geöffneten Stellung regelmäßig an dem mittels der Verstelleinrichtung 33 verstellbaren Pilotverschlusselement 20 anliegt, kann das Hauptverschlusselement 3 mittels der Verstelleinrichtung 33 in der geöffneten Stellung in einer Mehrzahl von Öffnungspositionen angeordnet werden. Dabei definiert jede Öffnungsposition eine vorbestimmte Durchflussmenge des fließfähigen Mediums durch das Ventil 1.

Wie anhand von Fig. 3 ersichtlich ist, weist die Verstelleinrichtung 33 das Stellglied 29 und eine Kombination aus einer Steuerkurve 34 und einer Mehrzahl von an der Steuerkurve 34 entlanggleitenden Absätzen 35 auf. Die Steuerkurve 34 bildet dabei die erwähnte Begrenzung in dem Stellglied 29 für das Handbedienelement 2. Die Steuerkurve 34 ist bei der hier beschriebenen Ausführungsform als Sägezahnprofil am oberen Ende der radial nach innen weisenden Innenseite des Stellglieds 29 ausgebildet. Die Absätze 35 sind als an der Steuerkurve 34 entlang bewegbare Stifte an der radial nach außen weisenden Außenseite des Handbedienelements 2 ausgebildet. Wenn das Stellglied 29 um die Längsachse 12 gedreht oder geschwenkt wird, kann das Handbedienelement 2 mit den Absätzen 35 entlang der Steuerkurve 34 und somit entlang der Längsachse 12 verschoben werden.

Das Handbedienelement 2 ist somit mit der Stellmechanik 32 diskret entlang der Längsachse 12 verstellbar und zusätzlich mit der Verstelleinrichtung 33 stufenlos entlang der Längsachse 12 verstellbar.

Nachfolgend werden die Zustände des Ventils und das Schalten des Ventils zwischen den Zuständen noch einmal zusammengefasst.

In Fig. 2 befindet sich das Hauptverschlusselement 3 in der geöffneten Stellung, wobei allerdings das Hauptverschlusselement 3 durch stufenloses Verstellen in direkten Kontakt mit dem Hauptventilsitz 4 gebracht wurde.

Um von dem geöffneten Zustand des Ventils 1 in den geschlossenen Zustand des Ventils 1 zu schalten, kann das Handbedienelement 2 aufgrund der Stellmechanik 32 entlang der Längsachse 12 gedrückt und das Hauptverschlusselement 3 diskret zwischen der geöffneten Stellung und der geschlossenen Stellung verstellt werden.

Durch das Drücken des Handbedienelements 2 im geöffneten Zustand des Ventils 1 wird das Pilotverschlusselement 20 mittels des Handbedienelements 2 gegen den Pilotventilsitz 21 gedrückt und das Hauptverschlusselement 3 wird gegen den Hauptventilsitz 4 gedrückt. Dadurch wird in der Druckkammer 14 ein Druck aufgebaut, welcher das Pilotverschlusselement 20 auch bei entlastetem Handbedienelement 2 gegen den Pilotventilsitz 21 und das das Hauptverschlusselement 3 gegen den Hauptventilsitz 4 drückt, und so das Ventil 1 in dem geschlossenen Zustand hält.

Um von dem geschlossenen Zustand des Ventils 1 wieder in den geöffneten Zustand des Ventils 1 zu gelangen, kann das Handbedienelement 2 erneut entlang der Längsachse 12 gedrückt werden.

Dabei führt ein Drücken auf das Handbedienelement 2 längs der Längsachse 12 dazu, dass sich zunächst die Aufnahme 8 relativ zum Stößel 9 nach unten bewegt.

Die Beweglichkeit des Stößels 9 in der Aufnahme 8 erlaubt, dass das Handbedienelement 2 über ein durch das Pilotverschlusselement 20 vorgegebenes Ende des Verstellwegs für das Steuerelement 5 hinaus bewegen lässt. Dies ist bei einer Push-Push-Verriegelungsmechanik von Vorteil, da dann über den unteren (in Bezug auf die Push-Bewegung) Totpunkt oder stabilen Punkt hinausgegangen werden kann, um das Handbedienelement 2 von einer unteren Stellung in eine obere Stellung zurückzuholen.

Wenn das Handbedienelement 2 in die obere Stellung verlagert wird, nimmt es den Stößel 9 und das Steuerelement 5 mit. Denn der mit dem Steuerelement 5 verbundene Stößel 9 weist einen größeren Querschnitt auf als eine Durchtrittsöffnung für das Steuerelement 5 in einer unteren Anlagefläche der Aufnahme 8, durch die das Steuerelement 5 in die Aufnahme 8 geführt ist. Der Stößel 9 kann somit an der unteren Anlagefläche der Aufnahme 8 anliegen und bei Verlagerung des Handbedienelements 2 in die obere Stellung nach oben mitgenommen werden.

In dieser Situation gibt das Pilotverschlusselement 20 die Ablauföffnung 18 frei. Da jedoch noch Druck in der Druckkammer 14 aufgebaut ist, verbleibt das Hauptverschlusselement 3 zunächst in seiner geschlossenen Stellung.

Die Ablauföffnung 18 ist jedoch - wie bereits erwähnt - größer dimensioniert als die Befüllöffnung 15, sodass sich der Druck in der Druckkammer 14 über die Ablauföffnung 18 und den Ablauf 19 abbaut.

Dies führt dazu, dass der Druck in dem Zulauf 16 das Hauptverschlusselement 3 mit der Membran 25 anhebt, sodass das der Zulauf 16 und der Ablauf 19 fluidal verbunden sein können. In der geöffneten Stellung des Hauptverschlusselements 3 ist eine Beeinflussung einer Strömung eines fließfähigen Mediums von dem Zulauf 16 zu dem Ablauf 19 von dem Abstand des Hauptverschlusselements 3 zu dem Hauptventilsitz 4 abhängig.

Um das Ventil 1 in dem geöffneten Zustand in einen der möglichen Zwischenzustände zu verstellen, kann mit der Verstelleinrichtung eine Stellung des Handbedienelements 2 und somit eine Öffnungsstellung des Hauptverschlusselements 3 stufenlos verändert werden. Wenn das Handbedienelement 2 mit den daran ausgebildeten Absätzen 35 um die Längsachse 12 gedreht wird, bewegen sich die Absätze 35 an der Steuerkurve 34 in dem Stellglied 29 nach unten oder nach oben und nehmen dabei das Handbedienelement 2 mit. Somit kann ein Maximalabstand zwischen dem Hauptventilsitz 4 und dem distalen Ende 6 des Steuerelements 5, also ein Abstand zwischen dem Hauptventilsitz 4 einerseits und dem distalen Ende 6 beziehungsweise dem an diesem befestigten Pilotverschlusselement 20 andererseits einstellbar sein, wenn das Ventil 1 nicht in dem geschlossenen Zustand ist.

Ein Öffnungsquerschnitt am Hauptventilsitz 4, durch welchen ein fließfähiges Medium von dem Zulauf 16 in den Ablauf 19 strömen kann, ist somit in der geöffneten Stellung des Hauptverschlusselements 3 veränderbar.

Wenn das Pilotverschlusselement 20 im geöffneten Zustand des Ventils 1 nahe an die Ablauföffnung 18 herangeführt ist, kann dies zu einem kurzzeitigen Verschluss der Ablauföffnung 18 und damit einem erneuten Druckaufbau in der Druckkammer 14 führen. Da das Handbedienelement 2 weiterhin in seiner oberen Position ist, wird das Hauptverschlusselement 3 durch den Druckaufbau nicht bis zum Hauptventilsitz 4 gedruckt, sondern es wird nur so lange nach unten gedrückt, bis die Ablauföffnung 18 wieder geöffnet ist. Denn das Pilotverschlusselement 20 kann wegen der Position des Handbedienelements 2 dem Hauptverschlusselement 3 nicht weiter folgen, bis dieses den Hauptventilsitz 4 erreicht.

In diesem geöffneten Zustand des Pilotventils wird die Druckkammer 14 wieder entlastet, so dass das Hauptverschlusselement 3 wieder bestrebt ist, erneut nach oben zu gelangen. Es stellt sich somit ein schwebender Gleichgewichtszustand ein, in welchem das Hauptverschlusselement 3 in einer Zwischenstellung angeordnet ist und in welcher der Zulauf 16 teilweise geöffnet ist, sodass ein gegenüber der vollständig geöffneten Stellung des Hauptverschlusselements 3 verringerter Strom zwischen Zulauf 16 und Ablauf 19 eingestellt ist. Es ist somit erreicht, dass sich ein gegenüber dem vollständig geöffneten Zustand des Ventils 1 ein verringerter Maximalabstand zwischen dem Hauptventilsitz 4 und dem distalen Ende 6 des Steuerelements 5 einstellt.

Damit mit dem hier beschriebenen Ventil 1 ein beispielsweise geringer Durchfluss auf einfache Weise gezielt einstellbar sein kann, weist das Ventil 1 einen insbesondere in den Figuren 1, 4 und 5 gezeigten variablen Anschlag 36 und einen damit zusammenwirkenden Gegenanschlag 37 auf.

Mittels des variablen Anschlags 36 und des Gegenanschlags 37 ist die in der geöffneten Stellung des Hauptverschlusselements 3 einstellbare Durchflussmenge auf eine variable Untermenge begrenzbar.

Zu diesem Zweck ist der variable Anschlag 36 an einem lösbar mit dem Stellglied 29 verbundenen Ringkörper 38 ausgebildet und der Gegenanschlag 37 ist starr an dem Gehäuseteil 23c des Gehäuses des Ventils 1 ausgebildet. Das Stellglied 29 ist, wie beschrieben, ein bewegbarer Bestandteil der Verstelleinrichtung 33.

Wenn das Stellglied 29 in dem geöffneten Zustand des Ventils 1 um die Längsachse 12 gedreht oder geschwenkt wird, werden der Ringkörper 38 und der variable Anschlag 36 mit dem Stellglied 29 mitgedreht oder mitgeschwenkt. Der variable Anschlag 36 kann somit auf den starr an dem Gehäuse des Ventils 1 ausgebildeten Gegenanschlag 37 zubewegt werden oder von dem Gegenanschlag 37 wegbewegt werden, beispielsweise bis der variable Anschlag 36 den Gegenanschlag 37 kontaktiert, oder bis die erwähnten Absätze 35 eine Begrenzung in der Steuerkurve 34 erreichen. Wenn der variable Anschlag 36 den Gegenanschlag 37 kontaktiert, wirken sie in einer orthogonal um die Bewegungsrichtung des Verschlusselements 3 orientierten Drehrichtung miteinander zusammen.

Der variable Anschlag 36 ist mittels des Ringkörpers 38 variabel an der Mehrzahl von Führungselementen 31 an dem Stellglied 29 angeordnet bzw. anordbar. Zu diesem Zweck weist der Ringkörper 38 eine mit den Führungselementen 31 korrespondierende Zahnung 39 auf.

Dadurch, dass die Führungselemente 31 quer zu der Drehrichtung des Stellglieds 29 und insbesondere parallel zu der Längsachse 12 ausgebildet sind, kann der Ringkörper 38 entlang der Führungselemente 31 von dem Stellglied 29 abgenommen werden und quer zu den Führungselementen 31 mit dem Stellglied 29 gedreht werden. Wie beschrieben, kann das Hauptverschlusselement 3 durch die Drehung in der geöffneten Stellung eine beliebige Öffnungsposition einer Mehrzahl von Öffnungspositionen einnehmen, die eine vorbestimmte Durchflussmenge des fließfähigen Mediums durch das Ventil 1 definiert.

In der von dem Hauptverschlusselement 3 eingenommenen Öffnungsposition kann der Ringkörper 38 mit dem daran ausgebildeten variablen Anschlag 36 so an dem Stellglied 29 angeordnet werden, dass der variable Anschlag 36 den Gegenanschlag 37 kontaktiert, wie in den Fig. 1, Fig. 4 und Fig. 5 gezeigt. Die auf diese Weise eingestellte Öffnungsposition kann auch als Anschlagposition des Hauptverschlusselements 3 bezeichnet werden, da sie mit einer Anordnung des variablen Anschlags 36, insbesondere mit einer Positionierung und/oder Orientierung des variablen Anschlags 36 an dem Stellglied 29 gekoppelt ist.

Wird das Stellglied 29 ausgehend von der Anschlagposition so gedreht, dass sich der variable Anschlag 36 von dem Gegenanschlag 37 entfernt und später wieder so gedreht, dass sich der variable Anschlag 36 dem Gegenanschlag 37 annähert, ist ein Drehen des Stellglied 29 über den Kontakt des variablen Anschlags 36 mit dem Gegenanschlag 37 hinaus nicht möglich. Somit ist die Mehrzahl von ursprünglich von dem Hauptverschlusselement 3 einnehmbaren Öffnungspositionen mit dem variablen Anschlag 36 und dem Gegenanschlag 37 auf eine Untermenge dieser Mehrzahl begrenzt bzw. begrenzbar.

Da der variable Anschlag 36 variabel an dem Stellglied 29 angeordnet werden kann, ist die Untermenge, auf die die Menge von Öffnungspositionen begrenzbar ist, variabel. Mit anderen Worten ausgedrückt, ist es möglich, unterschiedliche Öffnungspositionen auszuschließen.

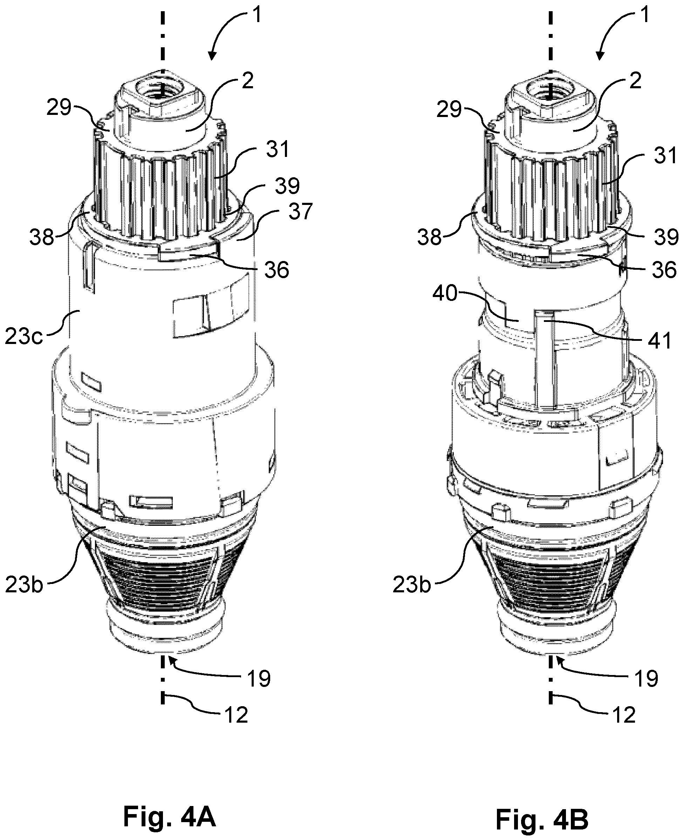

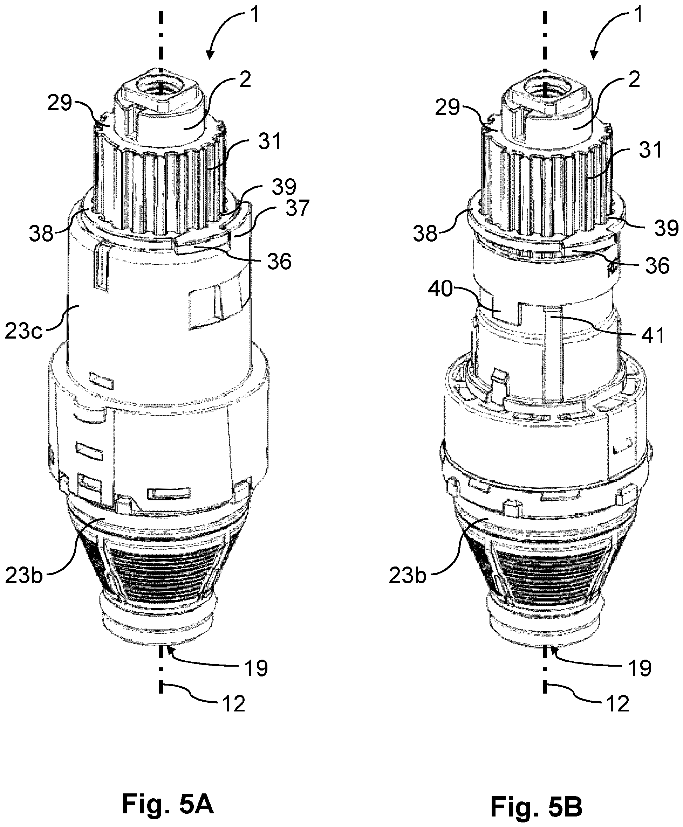

Wie insbesondere anhand eines Vergleichs der Fig. 4 und Fig. 5 ersichtlich ist, ist es möglich, den Ringkörper 38 und den variablen Anschlag 36 von dem Stellglied 29 zu entnehmen und das Hauptverschlusselement 3 im geöffneten Zustand des Ventils 1 mit der Verstelleinrichtung 33 vollständig an den Hauptventilsitz 4 heranzubewegen, so dass ein Durchfluss unterbunden ist. Diese Stellung ist in Fig. 4 gezeigt und stellt eine minimale Öffungsposition dar, die eine minimale Durchflussmenge des fließfähigen Mediums durch das Ventil 1 definiert. Im vorliegenden Ausführungsbeispiel ist die minimale Durchflussmenge identisch zu der Durchflussmenge im geschlossenen Zustand des Ventils **1.**

Wie in Fig. 4B gezeigt ist, liegt bei dem hier beschriebenen Ausführungsbeispiel, wenn das Hauptverschlusselement 3 in der minimalen Öffnungsposition angeordnet ist, ein an dem Stellglied 29 positionsfest ausgebildeter, invariabler Anschlag 40 an einem an der zweiten Hülse 30 positionsfest ausgebildeten zweiten Gegenanschlag 41 an. Der invariable Anschlag 40 und der zweite Gegenanschlag 41 wirken in einer orthogonal um die Bewegungsrichtung des Verschlusselements 3 orientierten Drehrichtung miteinander zusammen. Dadurch, dass die zweite Hülse 30 drehfest gegenüber dem Gehäuse des Ventils 1 angeordnet ist, ist auch der zweite Gegenanschlag 41 drehfest an dem Gehäuse angeordnet und kann somit eine Drehung des Stellglieds 29 auch dann begrenzen, wenn der variable Anschlag 36 nicht angeordnet ist.

Ausgehend von der in Fig. 4 gezeigten minimalen Öffnungsposition kann das Stellglied 29 so gedreht werden, dass das Hauptverschlusselement 3 aus der minimalen Öffnungsposition herausbewegt wird. In der so eingestellten Öffnungsposition, die das in Fig. 5 gezeigte Ventil 1 eingenommen hat, kann eine geringfügig größere Durchflussmenge des fließfähigen Mediums durch das Ventil 1 hindurchströmen als in der minimalen Öffnungsposition. In dieser Öffnungsposition weist der invariable Anschlag 40 einen Abstand zu dem zweiten Gegenanschlag 41 auf. Der variable Anschlag 36 kann weiterhin derart an dem Stellglied 29 angesetzt werden, dass der variable Anschlag 36 dessen Gegenanschlag 37 kontaktiert. Somit ist der variable Anschlag 36 in Bezug auf die minimale Öffnungsposition variabel anordbar. Ein Bewegen des Hauptverschlusselements 3 in die minimale Öffnungsposition, in der ein Durchfluss unterbunden ist, ist dann nicht mehr möglich.

Alternativ ist es auch möglich, den beschriebenen Maximalabstand zwischen dem Hauptverschlusselement 3 und dem Hauptventilsitz 4 im geöffneten Zustand des Ventils 1 mit der Verstelleinrichtung 33 größtmöglich einzustellen, so dass eine maximale Durchflussmenge erzielbar ist (in den Figuren nicht gezeigt). Diese Stellung stellt eine maximale Öffungsposition dar, die eine maximale Durchflussmenge des fließfähigen Mediums durch das Ventil 1 definiert. Wenn das Hauptverschlusselement 3 in der maximalen Öffnungsposition angeordnet ist, kann der an dem Stellglied 29 positionsfest ausgebildete, invariable Anschlag 40 an einem weiteren oder alternativen an der zweiten Hülse 30 positionsfest ausgebildeten zweiten Gegenanschlag anliegen (nicht gezeigt).

Ausgehend von der maximalen Öffnungsposition kann das Stellglied 29 so gedreht werden, dass das Hauptverschlusselement 3 aus der maximalen Öffnungsposition herausbewegt wird. In der so eingestellten Öffnungsposition kann eine geringfügig kleinere Durchflussmenge des fließfähigen Mediums durch das Ventil 1 hindurchströmen als in der maximalen Öffnungsposition. In dieser Öffnungsposition kann der invariable Anschlag 40 einen Abstand zu dem weiteren zweiten Gegenanschlag aufweisen. Der variable Anschlag 36 kann weiterhin derart an dem Stellglied 29 angesetzt werden, dass der variable Anschlag 36 dessen Gegenanschlag 37 kontaktiert. Somit ist der variable Anschlag 36 in Bezug auf die maximale Öffnungsposition variabel anordbar. Ein Bewegen des Hauptverschlusselements 3 in die maximale Öffnungsposition ist dann nicht mehr möglich.

### Bezugszeichenliste

- 1: Absperrorgan, Ventil
- 2: Handbedienelement
- 3: Verschlusselement, Hauptverschlusselement
- 4: Sitz, Hauptventilsitz
- 5: Steuerelement
- 6: distales Ende
- 7: Ausgleichvorrichtung
- 8: Aufnahme
- 9: Stößel
- 10: Rückstellelement
- 11: proximales Ende
- 12: Längsachse
- 14: Druckkammer
- 15: Befüllöffnung
- 16: Zulauf
- 17: Reinigungsstift
- 18: Ablauföffnung
- 19: Ablauf
- 20: zweites Verschlusselement, Pilotverschlusselement
- 21: zweiter Ventilsitz, Pilotventilsitz
- 22: Dichtung
- 23a: Gehäuseteil
- 23b: Gehäuseteil
- 23c: Gehäuseteil
- 24: Hauptkörper
- 25: Membran
- 26: Durchtrittsöffnung
- 27: Handbedienelement-Ruckstellfeder
- 28: Innenraum des Handbedienelements
- 29: erste Hülse
- 30: zweite Hülse
- 31: Führungselemente
- 32: Stellmechanik
- 33: Verstelleinrichtung
- 34: Steuerkurve, Sägezahnprofil
- 35: Absätze, Stifte
- 36: variabler Anschlag
- 37: Gegenanschlag
- 38: Ringkörper
- 39: Zahnung
- 40: invariabler Anschlag
- 41: zweiter Gegenanschlag

## Patentansprüche

1. Absperrorgan (1), insbesondere Ventil, für ein fließfähiges Medium mit mindestens einem in eine geöffnete Stellung und in eine geschlossene Stellung bringbaren Verschlusselement (3), wobei in der geöffneten Stellung eine Durchflussmenge des fließfähigen Mediums durch das Absperrorgan (1) einstellbar ist,
**dadurch gekennzeichnet, dass**
das Absperrorgan (1) einen variablen Anschlag (36), insbesondere einen variabel anordbaren Anschlag (36), und einen damit zusammenwirkenden Gegenanschlag (37) aufweist, mittels welchen beiden die in der geöffneten Stellung einstellbare Durchflussmenge auf eine variable Untermenge begrenzbar ist.

2. Absperrorgan (1) nach dem vorgehenden Anspruch, **dadurch gekennzeichnet, dass** das Verschlusselement (1) in der geöffneten Stellung in einer Mehrzahl von Öffnungspositionen anordbar ist, wobei jede Öffnungsposition eine vorbestimmte Durchflussmenge des fließfähigen Mediums durch das Absperrorgan (1) definiert, wobei mit dem variablen Anschlag (36) und dem Gegenanschlag (37) die Mehrzahl von Öffnungspositionen auf eine variable Untermenge dieser Mehrzahl begrenzbar ist.

3. Absperrorgan (1) nach einem der vorgehenden Ansprüche,
**dadurch gekennzeichnet, dass** der variable Anschlag (36) in Bezug auf eine maximale Öffnungsposition, die eine maximale Durchflussmenge des fließfähigen Mediums durch das Absperrorgan (1) definiert, und/oder in Bezug auf eine minimale Öffnungsposition, die eine minimale Durchflussmenge des fließfähigen Mediums durch das Absperrorgan (1) definiert, variabel anordbar ist.

4. Absperrorgan (1) nach einem der vorgehenden Ansprüche,
**dadurch gekennzeichnet, dass** das Verschlusselement (3) in der geöffneten Stellung in einer Anschlagposition anordbar ist, die mit einer Anordnung des variablen Anschlags (36) gekoppelt ist.

5. Absperrorgan (1) nach einem der vorgehenden Ansprüche,
**dadurch gekennzeichnet, dass** das mindestens eine Verschlusselement (3) ein insbesondere mit einer bistabilen Stellmechanik (32) diskret zwischen der geöffneten Stellung und der geschlossenen Stellung schaltbares Verschlusselement (3) ist.

6. Absperrorgan (1) nach einem der vorgehenden Ansprüche,
**dadurch gekennzeichnet, dass** das Absperrorgan (1) eine Verstelleinrichtung (33) aufweist, mit welcher das mindestens eine Verschlusselement (3) in der Mehrzahl von Öffnungspositionen anordbar ist.

7. Absperrorgan (1) nach dem vorgehenden Anspruch, **dadurch gekennzeichnet, dass** der variable Anschlag (36) oder der Gegenanschlag (37) an einem bewegbaren Bestandteil der Verstelleinrichtung (33) anordbar, insbesondere lösbar damit verbindbar, ist.

8. Absperrorgan (1) nach einem der beiden vorgehenden Ansprüche, **dadurch gekennzeichnet, dass** die Verstelleinrichtung (33) als eine Mechanik, insbesondere eine Drehmechanik, mit einem Stellglied (29) ausgebildet ist, wobei der variable Anschlag (36) variabel an dem Stellglied (29) anordbar ist.

9. Absperrorgan (1) nach einem der drei vorgehenden Ansprüche, **dadurch gekennzeichnet, dass** die Verstelleinrichtung (33) eine Kombination aus einer Steuerkurve (34) und einer Mehrzahl von an der Steuerkurve (34) entlanggleitenden Absätzen (35) aufweist.

10. Absperrorgan (1) nach einem der beiden vorgehenden Ansprüche, **dadurch gekennzeichnet, dass** das Stellglied (29) eine Mehrzahl von quer zu einer Bewegungsrichtung, insbesondere quer zu einer Drehrichtung oder einer Drehebene der Drehmechanik, führende Führungselemente (31) für die Aufnahme einer Abdeckkappe aufweist, wobei der variable Anschlag (36) an einem oder an mehreren dieser Führungselemente (31) anordbar ist.

11. Absperrorgan (1) nach einem der Ansprüche 5 bis 10, **dadurch gekennzeichnet, dass** die Stellmechanik (32) und/oder die Verstelleinrichtung (33) eine Push-Push-Verriegelungsmechanik aufweist/aufweisen.

12. Absperrorgan (1) nach einem der vorgehenden Ansprüche,
**dadurch gekennzeichnet, dass** der variable Anschlag (36) an einem Ringkörper (38) ausgebildet ist.

13. Absperrorgan (1) nach dem vorgehenden Anspruch, **dadurch gekennzeichnet, dass** der Ringkörper (38) eine Zahnung (39) aufweist.

14. Absperrorgan (1) nach einem der vorgehenden Ansprüche,
**dadurch gekennzeichnet, dass** das Absperrorgan (1) einen invariablen Anschlag (40), und einen damit zusammenwirkenden zweiten Gegenanschlag (41) aufweist, wobei durch das Zusammenwirken des invariablen Anschlags (40) und des zweiten Gegenanschlags (41) die in der geöffneten Stellung einstellbare Durchflussmenge begrenzt ist.

15. Absperrorgan (1) nach einem der vorgehenden Ansprüche,
**dadurch gekennzeichnet, dass** das Absperrorgan (1) ein Membranventil mit Durchflusseinstellung ist.
